**Europäisches Patentamt**

**European Patent Office**

**Office européen des brevets**

(19)

(11) Publication number: **0 142 326**
**A1**

# (12) EUROPEAN PATENT APPLICATION

(21) Application number: **84307677.9**

(22) Date of filing: **07.11.84**

(51) Int. Cl.⁴: **G 02 F 1/137**

(30) Priority: **10.11.83 GB 8330005**

(43) Date of publication of application:
**22.05.85 Bulletin 85/21**

(84) Designated Contracting States:
**DE FR NL SE**

(71) Applicant: **International Standard Electric Corporation**
**320 Park Avenue**
**New York New York 10022(US)**

(72) Inventor: **Crossland, William Alden**
**15 School Lane**
**Harlow Essex(GB)**

(72) Inventor: **Davey, Anthony Bernard**
**26 Boyd Close**
**Bishops Stortford Hertfordshire(GB)**

(74) Representative: **Vaufrouard, John Charles**
**ITT Patent Department UK Maidstone Road Foots Cray**
**Sidcup KentDA14 5HT(GB)**

(54) **Liquid crystal display.**

(57) A ferro-electric liquid crystal display is adapted for viewing by reflection of light from the display. Each cell (12) of the display has a transparent front electrode (14) and a reflective back electrode (13). A polariser (17) is mounted in front of the display which is an odd number of quarter wavelengths in thickness. The polariser is orientated relative to the display to provide a maximum contrast ratio between the two cell conditions.

Croydon Printing Company Ltd

## LIQUID CRYSTAL DISPLAY

This invention relates to liquid crystal displays and in particular to such displays having picture elements (pixels) comprising ferro-electric liquid crystal cells disposed in an array on a silicon substrate.

Such devices have employed liquid crystals that do not exhibit ferro-electricity, and the material interacts with an applied electric field by way of an induced dipole. As a result they are not sensitive to the polarity of the applied field, but respond to the applied RMS voltage averaged over approximately one response time at that voltage. There may also be frequency dependence as in the case of so-called two-frequency materials, but this only affects the type of response produced by the applied field.

In contrast to this a ferro-electric liquid crystal exhibits a permanent electric dipole, and it is this permanent dipole which will interact with an applied electric field. Ferro-electric liquid crystals are of interest in display applications because they are expected to show a greater coupling with an applied field than that typical of a liquid crystal that relies on coupling with an induced dipole, and hence ferro-electric liquid crystals are expected to show a faster response.

In particular the electro-optical response time of a smectic C liquid crystal can be as much as 1000 to 10,000 times faster than a conventional non-ferro-electric material.

Conventionally liquid crystal cells employing a smectic C material have been viewed in transmission via a pair of polarisers whereby a suitable contrast ratio between the two states of the liquid crystal is obtained.

A particularly advantageous construction of a ferro-electric display is described in our co-pending European Patent Application No.84307155.6 where the liquid crystal cells are disposed on a substrate comprising a silicon wafer incorporating the circuitry whereby the cells of the display are addressed and operated. As silicon is opaque at visible wavelength, it will be appreciated that such a display must be viewed in reflection. It is therefore necessary to provide means whereby the different optical properties of the two states of the ferro-electric material may be viewed.

According to the invention there is provided a ferro-electric liquid crystal display, including a plurality of display cells disposed on a substrate, each cell comprising a metal back electrode and a transparent front electrode whereby a ferro-electric liquid crystal material disposed therebetween may be switched between its two stable states, and a single polariser via which the display is viewed by specular reflection of light from the metal back electrodes, and wherein the optical thickness of each cell is equal to an odd number of quarter wavelength divided by the birefringence of the liquid crystal material.

In use the orientation of the polariser relative to the display is subjected to achieve the optimum contrast ratio between the two display conditions. The arrangement may be used in a data terminal.

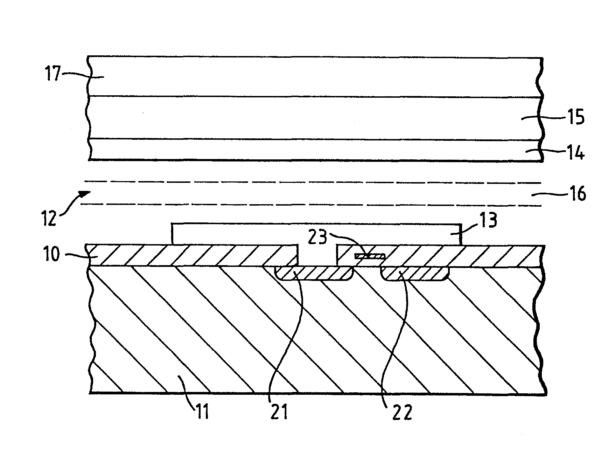

An embodiment of the invention will now be described with reference to the accompanying drawing in which the single figure is a cross-sectional view of a portion of a ferro-electric liquid crystal display.

- 3 -

Referring to the drawing, the display is supported on a substrate 11 comprising, e.g. a silicon wafer; and includes a plurality of cells 12 one for each element or pixel of the display. Each cell 12 includes a reflective metal back electrode 13 supported on the substrate, a transparent front electrode 14 supported on a transparent front panel 15 and a quantity of a ferro-electric liquid crystal 16 material disposed between the electrode. Typically the liquid crystal is a smectic C material, for example p-hexyloxy benzylidene-p'-amino-2-chloro-$\alpha$-propyl cinnamate. Operation of the display may be effected by an addressing process such as that described in our co-pending European Patent Application No.84307155.6.

In a typical construction the electrode 13 is coupled to the drain of a field effect transistor formed in the substrate 11 and comprising doped regions 21 and 22 defining a channel region therebetween. A gate electrode 23 is disposed in a silica layer 10 above the channel region of the transistor. The cell is operated by applying a control signal to the gate such that the back electrode 13 is driven to a positive or negative voltage relative to the front electrode 14.

Although only a single cell is shown the display of course comprises a plurality of such cells disposed on a common substrate, e.g. in a rectangular array.

A polariser 17 is mounted in front of the display, the orientation of the polariser being adjusted to provide maximum contrast ratio between the two states of the liquid crystal. In one condition of the cell the plane of polarisation of the reflected light corresponds to that of the polariser and the cell appears light. In the other condition the plane of polarisation is transverse to that of the polariser and the cell appears dark.

The intensity F of light reflected from the display relative to the intensity $F_o$ of incident light is given by the expression

$$F = F_o (1 - \sin^2 4\,\Omega_o \sin^2\Delta)$$ where $\Omega_o$ is the molecular tilt of the liquid crystal and $\Delta$ is given by $\Delta = \dfrac{2\pi\ \Delta n.d}{\lambda}$

where $n$ is the birefringence of the liquid crystal, $d$ is the cell thickness and $\lambda$ is the wavelength of the incident light. Clearly this will give maximum reflection (white display) when

$$4\,\Omega_o = 0,\ \pi,\ 2\pi\ \ldots$$

or $\Omega_o = 0,\ \dfrac{\pi}{4},\ \dfrac{\pi}{2}\ \ldots;$

and minimum reflection (black display) when

$$4\,\Omega_o = \dfrac{\pi}{2},\ \dfrac{3\pi}{2},\ \dfrac{5\pi}{2}$$

or $\Omega_o = \dfrac{\pi}{8}$

In fact with currently available materials the only tilt angle that is feasible for minimum reflection is $\dfrac{\pi}{8}$ or $22.5^o$.

Again for minimum reflection, i.e. maximum contact ratio, $\Delta = \dfrac{\pi}{2},\ \dfrac{3\pi}{2} \ldots$ For $\Delta = \dfrac{\pi}{2}$ we have $d = \dfrac{\lambda}{\Delta n.4}$

and from $\Delta = \dfrac{3\pi}{2}$

$$d = \dfrac{3\lambda}{\Delta n.4}$$

Thus the cell thickness should be equal to an odd number of quarter wavelengths divided by the birefringence.

In a further embodiment the cell may contain a dichroic dye, the cell then appearing coloured or colourless in its two conditions.

- 5 -

CLAIMS:

1. A liquid crystal display, characterised in that it includes a plurality of ferro-electric liquid crystal display cells (12) disposed on a substrate (11), each cell comprising a metal back electrode (13) and a transparent front electrode (14) whereby a ferro-electric liquid crystal material (16) disposed therebetween may be switched between its two stable states, and a single polariser (17) via which the display is viewed by specular reflection of light from the metal back electrodes (13), and wherein the optical thickness of each cell (12) is equal to an odd number of quarter wavelengths divided by the birefringence of the liquid crystal material (16).

2. A display as claimed in claim 1, characterised in that the substrate (11) comprises a silicon wafer.

3. A display as claimed in claim 2, characterised in that wafer incorporates means (21, 22, 23) for addressing the individual pixels of the display.

4. A display as claimed in claim 1, 2 or 3, characterised in that it includes a dichroic dye.

5. A display as claimed in any one of claims 1 to 4, characterised in that the liquid crystal material (16) comprises p-hexyloxy benzylidene-p'-amino-2-chloro-α-propyl cinnamata.

6. A data terminal characterised in a display as claimed in any one of claims 1 to 5.

Fig. 1

# EUROPEAN SEARCH REPORT

| | DOCUMENTS CONSIDERED TO BE RELEVANT | | EP 84307677.9 |
|---|---|---|---|

| Category | Citation of document with indication. where appropriate, of relevant passages | Relevant to claim | CLASSIFICATION OF THE APPLICATION (Int Cl 4) |
|---|---|---|---|
| A | EP - A1 - 0 091 661 (HITACHI)  <br> * Fig. 3,4; page 7, line 20 - page 9, line 14 * | 1,3,6 | G 02 F   1/137 |
| A | EP - A1 - 0 032 362 (LAGER WALL)  <br> * Fig. 2; page 5, line 21 - page 8, line 19; page 11, lines 3-23; page 14, line 9 - page 17, line 29; claim 3 * | 1,3-5,6 | |
| A | EP - A2 - 0 092 181 (HITACHI)  <br> * Fig. 2; table 1; page 6, line 20 - page 7, line 15; page 8, lines 5-17 * | 1,2-5 | |
| A | EP - A2 - 0 091 637 (HITACHI)  <br> * Page 2, line 2 - page 5, line 25; page 10, line 18 - page 12, line 5; page 20 - line 5 - page 28, line 18 * | 1,3,4 | TECHNICAL FIELDS SEARCHED (Int. Cl.4) <br><br> G 02 F   1/00 |
| A | FR - A1 - 2 373 849 (HUGUES)  <br> * Fig. 1-3 * | 1-3 | |

The present search report has been drawn up for all claims

| Place of search | Date of completion of the search | Examiner |
|---|---|---|
| VIENNA | 22-01-1985 | GRONAU |